# EUROPEAN PATENT APPLICATION

(11) **EP 1 475 704 A2**
(43) Date of publication of application: **10.11.2004**
(21) Application number: 04010367.3
(22) Date of filing: 30.04.2004
(51) Int. Cl.: G06F 9/445

(54) **Information processing apparatus**

(30) Priority: 08.05.2003 JP 2003130107
(71) Applicant: MATSUSHITA ELECTRIC INDUSTRIAL CO., LTD., Kadoma-shi, Osaka 571-8501 (JP)
(72) Inventor: Okuno, Kohji, Osaka-shi Osaka-fu 558-0011 (JP); Enoki, Nobuyuki, Hirakata-shi Osaka-fu 573-0164 (JP); Yasuda, Kei, Nishinomiya-shi Hyogo-ken 663-8113 (JP)
(74) Representative: Gassner, Wolfgang

(57) **Abstract**

An information processing apparatus controlled by a control program includes a recording medium reading section (102) controlled by the control program to perform loading/unloading of a recording medium, a program data storing section (104) for storing program data corresponding to the control program, a program status verifying section (103) for verifying the correctness of the program data stored in the program data storing section (104) prior to boot up of the control program, and a recording medium reading control section (110). When the correctness of the program data is not verified by the program status verifying section (103), and the recording medium reading section (102) is in a first state where a user cannot physically mount a recording medium, the recording medium reading control section (110) changes the recording medium reading section (102) from the first state to a second state where the user can physically mount a recording medium.

## Description

### BACKGROUND OF THE INVENTION

### Field of the Invention

The present invention relates to an information processing apparatus including a reading section for reading data stored in a recording medium such as a DVD-ROM medium, a DVD-RAM medium, a CD medium, and an MD medium, which can be mounted on or dismounted from a main unit by a user. More particularly, the present invention relates to an information processing apparatus having a first state in which the user cannot physically mount a recording medium, and a second state in which the user can physically mount a recording medium. Also, the present invention relates to a control method for controlling the above-described information processing apparatus, a boot up program therefor, and a recording medium in which program data of the boot up program is stored. The present invention is suitable for a DVD recorder for recording a TV program, a DVD audio device, a CD audio device, an MD audio device, an on-vehicle audio device, for example.

### Description of the Background Art

A DVD recorder by which a user can store broadcasted contents in a DVD-RAM medium is gaining in popularity. Such a DVD recorder has a DVD-RAM drive, a CPU, a memory, a screen rendering function, a remote controller, and other user interfaces, and is provided with the same function as a so-called personal computer. The DVD recorder is controlled by a control program operating on a CPU. The DVD recorder includes a rewritable nonvolatile ROM such as flash memory, and stores program data corresponding to the control program in the rewritable nonvolatile ROM.

On the other hand, there already exists a personal computer including a recording medium reading section such as a DVD-RAM drive or a CD-ROM drive. For example, Japanese Patent Laid-Open Publication No. H10-268958 discloses a technique for checking whether or not a CD-ROM medium is mounted on a personal computer capable of using its CD-ROM device as a primary boot device. If it is recognized that a CD-ROM medium is not mounted when a CD-ROM drive is used as a primary boot device, the personal computer disclosed in Japanese Patent Laid-Open Publication No. H10-268958 opens a tray of the CD-ROM drive, thereby providing an environment in which the user can physically mount a CD-ROM medium.

As described in Japanese Patent Laid-Open Publication No. H10-268958, the recording medium reading section of the personal computer and the DVD recorder uses an electric-powered tray drived by a motor. As a result, the user cannot mount a recording medium in a power OFF state. Thus, the user operates an EJECT button provided on a main unit in a power ON state, thereby opening the tray and mounting a recording medium. In this case, the control program detects that the EJECT button is depressed, transmits a command to the reading section based on the detecting results, and performs control so as to open the tray by driving a motor of the reading section. That is, the recording medium reading section is controlled by the control program so as to perform loading and unloading of a recording medium.

The control program can be updated by rewriting program data. In the case of a personal computer, a control program such as an operating system and a device driver can be updated by rewriting program data stored in a hard disk, etc. In the case of a DVD recorder, a control program can be updated by rewriting program data stored in a rewritable nonvolatile ROM. The program data related to the above-described update is supplied to the user by directly distributing a DVD-ROM medium and a CD-ROM medium, in which the data is stored, to the user, or allowing the user to download the data via the Internet.

However, there is a possibility that new program data may not be stored because of an unsuccessful install of program data due to abnormal termination, etc. Especially, in the case where program data is written in a rewritable nonvolatile ROM such as a DVD recorder, previously-stored program data is deleted, and therefore it is only after new program data is completely stored therein that the user obtains a executable program data. Thus, in general, a recording medium, in which a recovery program for recovering the pre-update program data is stored, is prepared, and this recording medium is mounted on the recording medium reading section for performing a recovery process when new program data is not completely stored.

In the case of the personal computer, the recording medium reading section itself often has an EJECT button for opening the tray, whereby it is possible to control opening/closing of the tray independently of the control program such as an operating system, etc. Thus, even if there is no executable program data, the user can open the tray by operating the EJECT button, and insert a recording medium storing recovery program data into the recording medium reading section.

However, unlike the personal computer, in the case of the DVD recorder, an EJECT button is provided on its front panel for opening the tray of the recording medium reading section. Further, in the case of the DVD recorder, opening/closing of the tray is often controlled by detection of an EJECT button operation performed by the control program. That is, the recording medium reading section of the DVD recorder is controlled by the control program so as to perform loading and unloading of a recording medium. As a result, when there is no executable program data, the user cannot open the tray even if he/she operates the EJECT button. The user cannot mount the recording medium storing the recovery program data on the recording medium reading section because the tray is not opened. Also, if a recording medium different from the recording medium storing the recovery program is mounted on the recording medium reading section, the user cannot remove this recording medium therefrom.

Japanese Patent Laid-Open Publication No. H10-268958 discloses the technique for opening a tray based on whether or not a recording medium is mounted on the tray of the recording medium reading section, and therefore the tray is not opened when a recording medium is mounted thereon. That is, the device disclosed in Japanese Patent Laid-Open Publication No. H10-268958 allows the user to open the tray of the recording medium reading section at any time by operating the EJECT button, and it is not assumed that there may be circumstances in which the user cannot open the tray. As a result, even if the technique disclosed in Japanese Patent Laid-Open Publication No. H10-268958 is applied to the DVD recorder, there is a possibility that the user cannot mount the recording medium storing the recovery program when the program data related to the control program is completely or partly deleted.

In order to prevent an unsuccessful update of program data, a method may be employed such that two areas are prepared for writing program data thereinto, and the above-described two areas are alternately used when program data is updated. However, an additional rewritable memory is required in the above-described method, thereby resulting in increased product costs.

### SUMMARY OF THE INVENTION

Therefore, an object of the present invention is to provide an improved information processing apparatus. Especially, an object of the present invention is to provide an information processing apparatus capable of easily recovering a control program, even if an update of the control program is unsuccessful, with no increase in product costs. Also, another object of the present invention is to provide a control method, a program therefor, and a recording medium in which program data of the program is stored.

The present invention has the following features to attain the object mentioned above.

The present invention is directed to an information processing apparatus controlled by a control program. The information processing apparatus comprises: a recording medium reading section controlled by the control program so as to perform loading and unloading of a recording medium; a program data storing section for storing program data corresponding to the control program; a program status verifying section for verifying the correctness of the program data stored in the program data storing section prior to boot up of the control program; and a control section for changing a state of the recording medium reading section from a first state, in which a user is not allowed to physically mount the recording medium, to a second state, in which the user is allowed to physically mount the recording medium, if the correctness of the program data is not verified by the program status verifying section and the recording medium reading section is in the first state.

Based on the above-described structure, a user can physically mount a recording medium even if there is no verified program data. Thus, it is possible to mount a recording medium storing recovery program data on the recording medium reading section even if there is no verified program data. Also, even if a recording medium, in which no recovery program data is stored, is mounted on the recording medium reading section when there is no verified program data, it is possible to remove this recording medium. Further, the present invention requires no additional element such as a memory, whereby it can be realized with no increase in costs.

Preferably, the information processing apparatus comprises an input section for accepting an input from outside, and an output section for outputting, if the correctness of the program data is not verified by the program status verifying section, information based thereon to the user. When the output section outputs the information, the control section waits for an input to the input section, and changes a state of the recording medium reading section from the first state to the second state in response to the input to the input section.

Based on the above-described structure, the user can physically mount a recording medium after an input to the input section is performed. Thus, the user can expect that the recording medium reading section changes to a state in which he/she can physically mount a recording medium thereon.

As one example, the input section is an operation member provided on a main unit of the information processing apparatus. As another example, the input section is a light receiving section provided on a main unit of the information processing apparatus. As still another example, the input section is an interface for receiving a signal, which is input to an external device connected to the information processing apparatus, and transmitted from the external device.

As one example, the output section is a display device provided on a main unit of the information processing apparatus. As another example, the output section is an interface for transmitting a signal to an external device connected to the information processing apparatus.

Preferably, the program status verifying section performs verification at a time of bootstrap of the information processing apparatus.

The present invention is also directed to a control method of an information processing apparatus including a recording medium reading section controlled by a control program so as to perform loading and unloading of a recording medium. The control method comprises: a first step of verifying the correctness of program data corresponding to the control program prior to boot up of the control program; and a second step of changing a state of the recording medium reading section from a first state, in which a user is not allowed to physically mount a recording medium, to a second state, in which the user is allowed to physically mount the recording medium, if the correctness of the program data is not verified.

Based on the above-described structure, a user can physically mount a recording medium even if there is no verified program data. Thus, it is possible to mount a recording medium storing recovery program data on the recording medium reading section even if there is no verified program data. Also, even if a recording medium, in which no recovery program data is stored, is mounted on the recording medium reading section when there is no verified program data, it is possible to remove this recording medium.

Preferably, the control method comprises a third step of outputting, if the correctness of the program data is not verified, information based thereon prior to the second step; and a fourth step of disabling the second step after the third step until an input from outside is performed.

Based on the above-described structure, the user can physically mount a recording medium after an input to the input section is performed. Thus, the user can expect that the recording medium reading section changes to a state in which he/she can physically mount a recording medium thereon.

Preferably, the control method comprises a fifth step of detecting whether the recording medium reading section is in the first state or in the second state after the second step. Also, preferably, the control method comprises a sixth step of detecting whether or not the recording medium is mounted after the second step. In this case, when it is detected in the sixth step that the recording medium is not mounted, a state is preferably returned to a state after execution of the first step.

Preferably, the control method comprises a seventh step of detecting, after the second step, whether or not the mounted recording medium stores program data related to a recovery program for recovering the program data. In this case, when it is detected in the seventh step that the program data related to the recovery program is not stored, a state is preferably returned to a state after execution of the first step.

Preferably, the control method comprises an eighth step of recovering the control program data after the second step by executing a recovery program for recovering program data on the mounted recording medium.

Preferably, the first and second steps are executed at a time of bootstrap of the information processing apparatus.

The present invention is also directed to a boot up program which is executed at a time of bootstrap of an information processing apparatus including a recording medium reading section controlled by a control program so as to perform loading and unloading of a recording medium. The boot up program comprises: a first step of verifying the correctness of program data of the control program prior to boot up of the control program; and a second step of changing a state of the recording medium reading section from a first state, in which a user is not allowed to physically mount a recording medium, to a second state, in which the user is allowed to physically mount the recording medium, if the correctness of the program data is not verified.

In the case where the program of the present invention is executed, the user can physically mount a recording medium even if there is no verified program data. Thus, in the case where the program of the present invention is executed, it is possible to mount a recording medium storing a recovery program on the recording medium reading section even if there is no verified program data. Also, in the case where the program of the present invention is executed, even if a recording medium, in which no recovery program data is stored, is mounted on the recording medium reading section when there is no verified program data, it is possible to remove this recording medium.

The present invention is directed to a recording medium which stores program data of a boot up program to be executed at a time of bootstrap of an information processing apparatus including a recording medium reading section controlled by a control program so as to perform loading and unloading of a recording medium. The boot up program includes: a first step of verifying the correctness of program data of the control program; and a second step of changing a state of the recording medium reading section from a first state, in which a user is not allowed to physically mount a recording medium, to a second state, in which the user is allowed to physically mount the recording medium, if the correctness of the program data is not verified.

In the case where the program of the present invention is executed, the user can physically mount a recording medium even if there is no verified program data. Thus, in the case where the program of the present invention is executed, it is possible to mount a recording medium storing a recovery program on the recording medium reading section even if there is no verified program data. Also, in the case where the program of the present invention is executed, even if a recording medium, in which no recovery program data is stored, is mounted on the recording medium reading section when there is no verified program data, it is possible to remove this recording medium.

Based on the present invention, it is possible to provide an information processing apparatus capable of easily recovering a control program, even if an update of the control program is unsuccessful, with no increase in product costs. Also, based on the present invention, it is possible to provide a control method, a boot up program therefor, and a recording medium in which program data of the boot up program is stored.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram showing a hardware structure of an information processing apparatus according to one embodiment of the present invention;
FIG. 2A is a perspective view showing a DVD recorder whose tray of a DVD-RAM drive is closed;
FIG. 2B is a perspective view of the DVD recorder whose tray of the DVD-RAM drive is opened;
FIG. 3 is a software block diagram showing a flow of a signal of the information processing apparatus according to one embodiment of the present invention;
FIG. 4 is a flowchart showing a procedure of a boot up program according to a first embodiment; and
FIG. 5 is a flowchart showing a procedure of a boot up program according to a second embodiment.

### DESCRIPTION OF THE PREFERRED EMBODIMENTS

Hereinafter, with reference to the drawings, embodiments of the present invention will be described.

### (first embodiment)

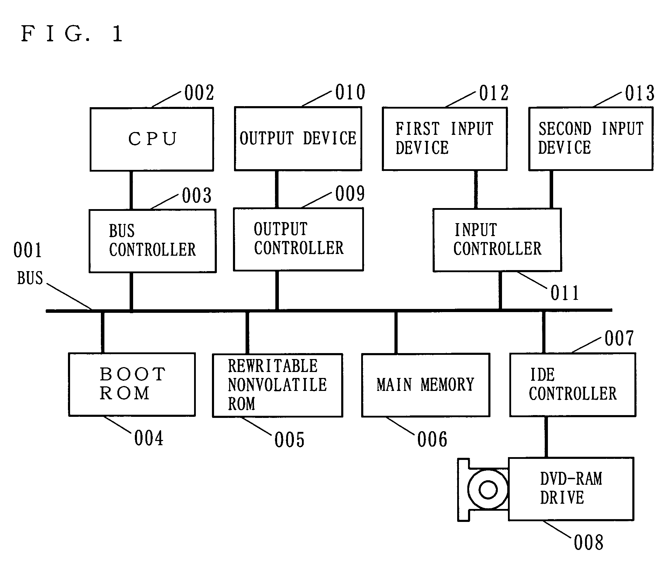

FIG. 1 is a diagram showing a hardware structure of an information processing apparatus according to one embodiment of the present invention. The information processing apparatus is a DVD recorder having a built-in DVD-RAM drive (a recording medium reading section). As shown in FIG. 1, the information processing apparatus includes a bus 001, a CPU 002, a bus controller 003, a BOOT ROM 004, a rewritable nonvolatile ROM 005, a main memory 006, an IDE controller 007 , a DVD-RAM drive 008, an output controller 009, an output device 010, an input controller 011, a first input device 012, and a second input device 013.

The CPU 002 controls a system of the information processing apparatus by executing a program based on program data stored in the main memory 006. Input/output pins of the CPU 002 are directly connected to the bus controller 003.

The bus controller 003 adjusts the bus 001, and performs DMA transfer between devices on the bus 001, for example.

The rewritable nonvolatile ROM 005 is a memory device for storing program data corresponding to an operation system, a device driver, and an application program to be executed, for example (hereinafter, collectively referred to as a control program). The rewritable nonvolatile ROM 005 is composed of, for example, a plurality of FLASH modules. The rewritable nonvolatile ROM 005 is connected to the bus 001.

The main memory 006 is a memory device for temporarily storing program data corresponding to the control program read from the rewritable nonvolatile ROM 005, and processing data, etc. The main memory 006 is composed of, for example, a plurality of DRAM modules. The main memory 006 is connected to the bus 001.

The BOOT ROM 004 is a memory device for storing program data corresponding to a boot program. The BOOT ROM 004 is composed of, for example, a MASK ROM. The BOOT ROM 004 is connected to the bus 001.

The IDE controller 007 is an LSI connected to the bus 001. The DVD-RAM drive 008 is an IDE device, and is controlled by the IDE controller 007. The output controller 009 is an LSI connected to the bus 001. The output device 010 is an FL tube, and is controlled by the output controller 009. The input controller 011 is an LSI connected to the bus 001. The first input device 012 is an EJECT button placed on a front panel, and is controlled by the output controller 009. The second input device 013 is a sensor for receiving a signal from a remote controller operated by a user, and is controlled by the output controller 009.

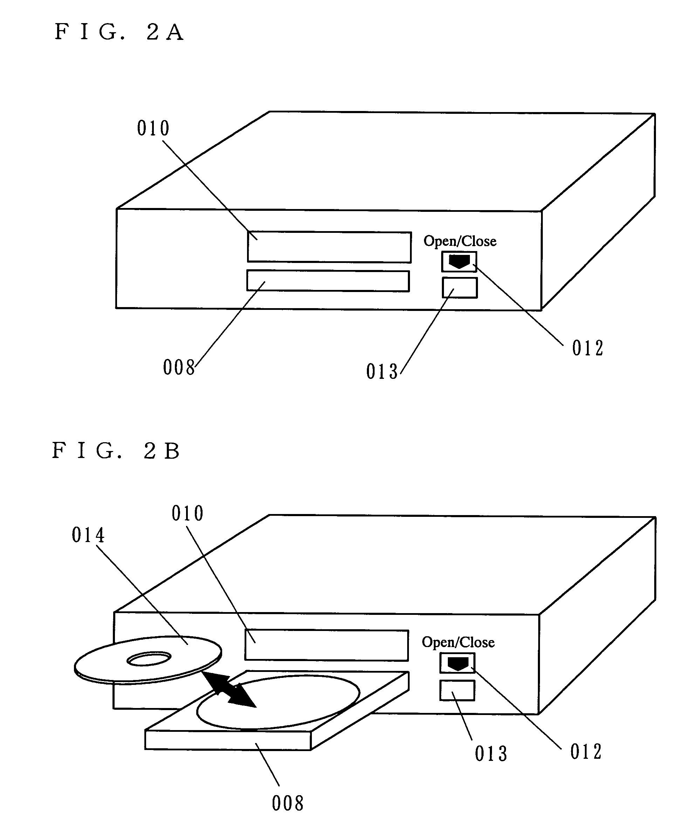

The above-described elements are placed on a main unit of the DVD recorder. The main unit of the DVD recorder supplies power to all the elements. An external view of the DVD recorder is shown in FIG. 2. FIG. 2A is a perspective view showing a DVD recorder whose tray of a DVD-RAM drive is closed, and FIG. 2B is a perspective view of the DVD recorder whose tray of the DVD-RAM drive is opened.

As shown in FIG. 2, the DVD-RAM drive 008, the FL tube 010, the EJECT button 012, a light receiving section 013 for receiving a signal from the remote controller are shown in the external view of the DVD recorder. The DVD-RAM drive 008 is a recording medium reading device with an electric-powered tray. When the control program detects that the user operates the EJECT button 012, the DVD-RAM drive 008 changes from a state (a first state, FIG. 2A) , in which the tray is inserted into the main unit of the DVD recorder, and the user is not allowed to mount a DVD-RAM medium 014 thereon to a state (a second state, FIG. 2B) in which the tray is ejected from the main unit of the DVD recorder, and the user is allowed to mount the DVD-RAM medium 014 thereon, and vice versa. When the second state changes to the first state, the DVD-RAM medium 014 is loaded by the control program so that reading is enabled. On the contrary, when the first state changes to the second state, the DVD-RAM medium 014 is unloaded by the control program so that reading is disabled. As such, the DVD-RAM drive 008 is controlled by the control program so as to perform loading and unloading of a recording medium.

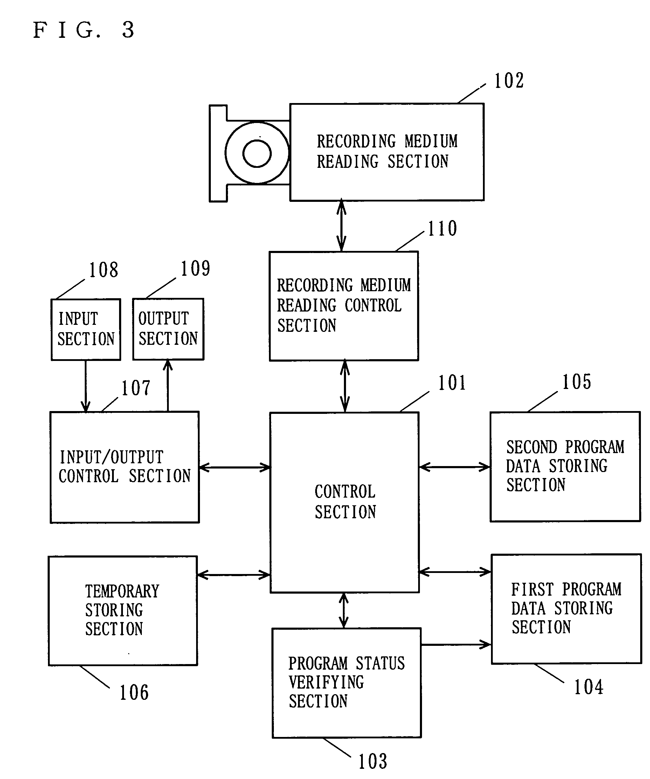

FIG. 3 is a software block diagram showing a flow of a signal of the information processing apparatus according to one embodiment of the present invention. A control section 101 functions as a center of the software block. The control section 101 is connected to a recordingmedium reading section 102 , a program status verifying section 103, a first program data storing section 104, a second program data storing section 105, a temporary storing section 106, an input/output control section 107, and a recording medium reading control section 110, and is able to transmit/receive a signal to/from each element.

The control section 101, the program status verifying section 103, and the recording medium reading control section 110 are realized by a boot up program which is executed on the CPU 002 included in the hardware structure as shown in FIG. 1. The recording medium reading section 102 corresponds to the IDE controller 007 and the DVD-RAM drive 002 included in the hardware structure as shown in FIG. 1. The recording medium reading control section 110 performs control such as opening/closing of a tray of the recording medium reading section 102, based on a control signal from the control section 101.

The first program data storing section 104 corresponds to the rewritable nonvolatile ROM 005 included in the hardware structure as shown in FIG. 1. The first program data storing section 104 stores program data corresponding to the control program. Also, the program status verifying section 103 is connected to the first program data storing section 104 so as to access the program data corresponding to the control program. The program status verifying section 103 verifies the correctness of the control program stored in the first program data storing section 104 in accordance with an instruction from the control section 101.

The second program data storing section 105 corresponds to the BOOT ROM 004 included in the hardware structure as shown in FIG. 1. The second program data storing section 105 stores program data corresponding to a boot program, which will be described below.

The temporary storing section 106 corresponds to the main memory 006 included in the hardware structure as shown in FIG. 1. The temporary storing section 106 temporarily stores program data corresponding to the control program read from the first program data storing section 104, and processing data, etc. The stored data is processed in accordance with an instruction from the control section 101.

The input/output control section 107 corresponds to the output controller 009 and the input controller 011 included in the hardware structure as shown in FIG. 1. The input/output control section 107 controls an input section 108 and an output section 109, which are connected to the input/output control section 107, based on a signal from the control section 101. The input section 108 corresponds to the first input device 012 (EJECT button 012) and the second input device 013 (light receiving section 013) included in the hardware structure as shown in FIG. 1. The output section 109 corresponds to the output device 010 (FL tube 010) included in the hardware structure as shown in FIG. 1.

When the main unit of the DVD recorder is powered ON, and is controlled by the operating system, the control section 101 reads an operating system, a device driver, and program data related to a DVD-RAM control application, which are control programs, into the temporary storing section 106, and enables the read control programs. In this state, if the input/output control section 107 receives, from the input section 108, a request to open/close the electric-powered tray (i.e. , the user operates the EJECT button 012 in FIG. 2A or FIG. 2B), the control section 101 executes the DVD-RAM control application and the device driver, and controls the recording medium reading section 102. As a result , the electric-powered tray slides out externally, and opens as shown in FIG. 2B. Thus, the DVD-RAM medium can be mounted thereon or dismounted therefrom.

However, when the main unit of the DVD recorder is powered OFF, or when the program data stored in the first program data storing section 104 is completely or partly deleted, for example, the electric-powered tray does not slide out externally and open, even if the input/output control section 107 receives, from the input section 108, a request to open/close the electric-powered tray (i.e., the user operates the EJECT button 012 in FIG. 2A or FIG. 2B).

In this embodiment, if anything is wrong with the program data related to the control program stored in the first program data storing section 104, the recording medium reading section 102 is controlled so as to automatically open/close the electric-powered tray. This system is realized using a boot up program.

Program data related to the boot up program is stored in the second program data storing section 105. The boot up program is located between the control program, such as the operating system and the application program, and the hardware. The boot up program includes a POST (Power On Self Test) program, which is first executed when a computer system is powered ON, various device driver programs used for hardware access, and a set-up program used for setting a system environment.

Also, the boot up program verifies the correctness of the program data related to the control program stored in the second program data storing section 105, automatically opens the electric-powered tray of the recording medium reading section 102 for urging the user to insert the recovery DVD-RAM medium, and reads a minimum recovery program, which is required for recovering the program data from the recovery DVD-RAM medium on the second program data storing section 105, from a boot area provided in a predetermined location in the recovery DVD-RAM medium for execution.

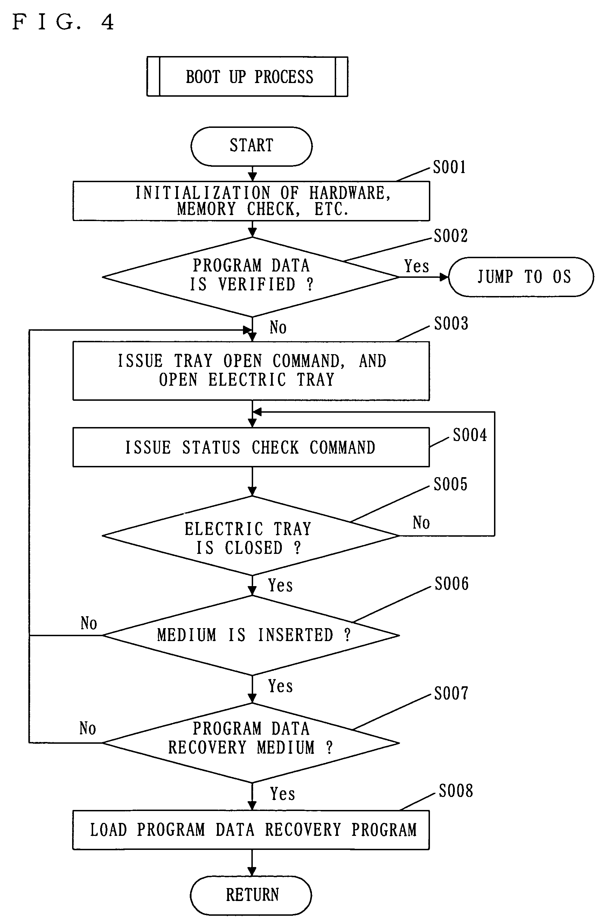

Verification of the correctness of the program data is performed by the program status verifying section 103 based on a comparison between a CRC (Cyclic Redundancy Check) checksum of all program data previously written in the second program data storing section 105 and a CRC checksum of the program data currently stored in the second program data storing section 105. A procedure of the above-described boot up program will be described below with reference to FIG. 4.

With reference to FIG. 4, a boot up process will be described. FIG. 4 is a flowchart showing a procedure of the boot up program according to the first embodiment.

When the DVD recorder is powered ON, a boot up program is first executed prior to all operations of the control program. First, the POST program of the boot up program is executed, and a memory check and initialization of various devices are performed (step S001). Next, the boot up program verifies whether or not the program data stored in the first program data storing section 104 is correct (step S002).

Verification of the correctness of the program data is performed by comparing a CRC checksum of all previously-known program data with a CRC checksum of the currently stored program, and checking correspondence therebetween. Specifically, the correctness of the program data is determined based on a comparison between a CRC checksum of all program data previously written in a specific location of the rewritable nonvolatile ROM 005 and a checksum of all program data stored in the current rewritable nonvolatile ROM 005.

If the correctness of the program data stored in the first program data storing section 104 is verified, the boot up program causes the temporary storing section 106 to read the program data stored in the first program data storing section 104, and boots up the operating system.

If the correctness of the program data stored in the first program data storing section 104 is not verified, the boot up program transmits a signal to the recording medium reading section 102, and opens the electric-powered tray (step S003).

Specifically, in order to open the electric-powered tray of the DVD-RAM drive 008, for example, an open command included in a typical command set for controlling the DVD-RAM drive 008 is issued to the IDE controller 007 which controls the DVD-RAM drive 008.

As a result, an environment in which the user can physically mount the DVD-RAM medium is realized. Then, the boot up program issues a status check command at regular intervals for checking whether or not the electric-powered tray is closed, and continues to monitor a status change of the electric-powered tray (steps S004 and S005). When it is detected that the electric-powered tray is closed, the boot up program issues a medium sensing command for rechecking whether or not the DVD-RAM medium is inserted (step S006). If the user inserts the DVD-RAM medium and closes the tray, it is detected that the DVD-RAM medium is inserted. On the other hand, if the user closes the tray without inserting the DVD-RAMmedium, it is detected that the DVD-RAMmedium is not inserted. If no DVD-RAM medium is inserted, the process goes back to step S003.

When it is detected that the DVD-RAM medium is inserted, the boot up program checks whether or not the inserted DVD-RAM medium is a DVD-RAM medium including program data of the recovery program (step S007). Fix data is written in a specific area of the DVD-RAM medium including program data of a recovery program, for example, whereby it is possible to determine whether or not a DVD-RAM medium includes program data of a recovery program.

If the inserted DVD-RAM medium is a DVD-RAM medium including program data of a recovery program, the boot up program reads a boot area in a predetermined location on the DVD-RAM medium, and loads program data of a bootstrap program stored therein into the main memory 006 for performing recovery of the program data. The boot up program then passes control to a bootstrap program on the DVD-RAM medium (step S009).

If the inserted DVD-RAM medium is not a DVD-RAM medium including program data of a recovery program, the process goes back to step S003.

Note that, in the above-described embodiment, the information processing apparatus having a DVD-RAM drive as a recording medium reading section has been described, but it is not limited thereto. For example, in the case of the information processing apparatus which is provided with a mechanical structure allowing a medium to be inserted/exchanged only when power is applied, such an information processing apparatus can be applied to other removable drives such as an MO drive and a CD-ROM drive independent of a type of medium.

Note that, in the above-described embodiment, an example in which program data of a recovery program for recovering a control program is loaded from a DVD-RAM medium has been described, but a program data recovery program may be included in a boot up program. Also, if reading from a plurality of types of media is possible, program data of a recovery program may be loaded from a CD medium or a DVD-RAM medium mounted on the DVD-RAM drive.

Note that, in the above-described embodiment, an example in which a boot up program is written in the second program data storing section 105 has been described, but it is not limited thereto. For example, the boot up program may be written in a fixed specific location of the first program data storing section 104, thereby being read from the first program data storing section 104. Also, in the above-described embodiment, an example in which program data is stored in the first program data storing section 104 (rewritable nonvolatile ROM 005) has been described, but any medium (e.g. , an HDD drive) capable of storing data may be used in place of the first program data storing section 104.

Note that, in the above-described embodiment, an example in which the control section 101 reads a control program from the first program data storing section 104 into the temporary storing section 106 for execution has been described, but it is not limited thereto. For example, the control section 101 may read program data directly from the first program data storing section 104 for execution.

As described above, the information processing apparatus according to the first embodiment includes a recording medium reading section, a program data storing section, a program status verifying section, and a recording medium reading control section. The recording medium reading section is controlled by a control program so as to perform loading and unloading of a recording medium. The program data storing section stores program data corresponding to the control program. The program status verifying section verifies the correctness of the program data stored in the program data storing section prior to boot up of the control program. When the correctness of the program data is not verified by the program status verifying section, and the recording medium reading section is in a first state in which the user cannot physically mount a recording medium, the recording medium reading control section changes a state of the recording medium reading section from the first state to a second state in which the user can physically mount a recording medium.

Based on the above-described structure, the information processing apparatus according to the above-described embodiment allows the user to physically mount a recording medium even if there is no verified program data. As a result, the user can mount a recording medium storing a recovery program on the recording medium reading section even if there is no verified program data. Also, even if a recording medium, in which no recovery program data is stored, is mounted on the recording medium reading section when there is no verified program data, the user can remove this recording medium. Also, the information processing apparatus according to the present embodiment requires no additional element such as a memory, whereby it can be realized with no increase in costs.

### (second embodiment)

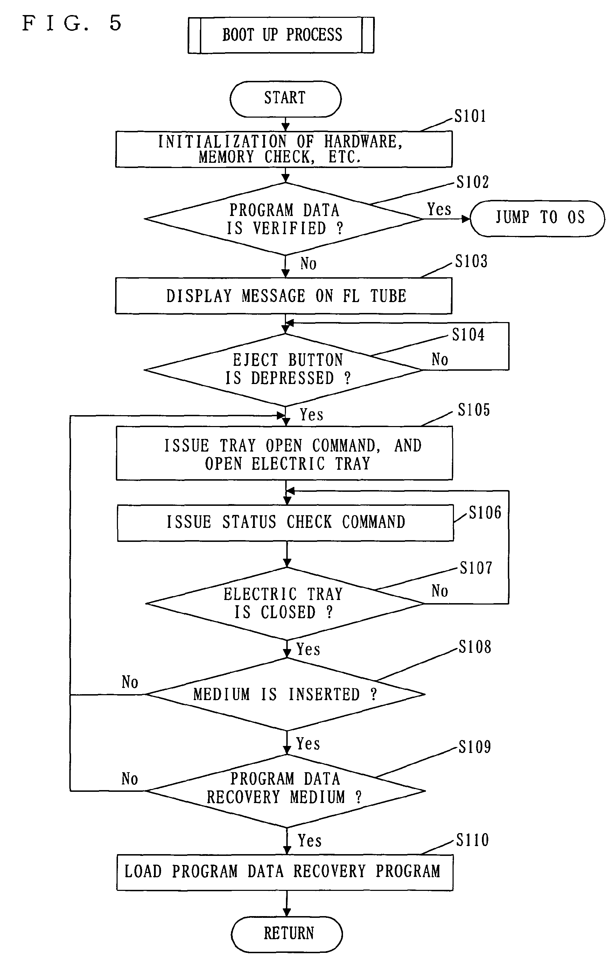

With reference to FIG. 5, a second embodiment will be described. The second embodiment differs from the first embodiment in the boot up process. FIG. 5 is a flowchart showing a procedure of a boot up program according to the second embodiment. In FIG. 5, step S101 and step S102 are the same as step S001 and step S002, respectively, of the first embodiment.

If the correctness of the program data is not verified in step S102, the boot up program displays a message like "PUSH OPEN" on the FL tube 010, which is the output section 109, by setting a command on the input/output control section 107 (step S103).

Then, the boot up program enters a wait state until an operation of the EJECT button 012 is detected (step S104).

When the boot up program detects an operation of the EJECT button 012, the control section 101 controls the recording medium reading section 102, and opens the electric-powered tray, as is the case with the first embodiment (step S105).

In the following procedure, the second embodiment is the same as the first embodiment except the process goes back to step S103 when a DVD-RAM medium is not detected in step S108, and when the inserted DVD-RAM medium is not a DVD-RAM medium including program data of a recovery program in step S109.

As described above, in addition to the elements of the information processing apparatus of the first embodiment, the information processing apparatus according to the second embodiment includes the input section and the output section. The input section accepts an input from outside. If the correctness of the program data is not verified by the program status verifying section, the output section outputs information based on the verification result to the user. When output section outputs the information, the recording medium reading control section waits for an input to the input section, and changes a state of the recording medium reading section from the first state to the second state in response to the input to the input section.

Based on the above-described structure, the user can physically mount a recording medium after an input to the input section is performed. Thus, the user can expect that the recording medium reading section changes to a state in which he/she can physically mount a recording medium thereon.

Thus, for example, in the case where the user does not want the recording medium reading section to move abruptly because the information processing apparatus is placed in a glass-fronted TV cabinet, etc. , it is possible to allow the user to prepare for the movement of the recording medium reading section.

Note that, in the above-described embodiment, an example in which the output section 109 is the FL tube 010, and a message is displayed using the FL tube 010 has been described, but it is not limited thereto. For example, the output section 109 may be any means capable of notifying the user of a message, such as a crystal liquid display or an organic electroluminescence display. Also, the control section 101 may display a message on an external device such as a monitor, to which the DVD recorder is connected. In this case, the output section 109 functions as an interface for transmitting a signal to the external device to which the DVD recorder is connected.

Note that, in the above-described embodiment, an example in which the input section 108 is the EJECT button 012, and an input is performed by the EJECT button 012 has been described, but it is not limited thereto. For example, the input section 108 may be any operation member capable of being operated manually by the user, such as a switch on a front panel, a display device functioning as a touch panel, and a pointing device and a jog dial, etc., provided on the main unit. Also, the electric-powered tray may be structured such that it is opened when the user depresses the tray itself. In this case, the operating member is the tray itself. Also, in the case where an optical signal input from the remote controller is detected by the light receiving section 013 in step S104 , the boot up program may control the electric-powered tray so as to be opened. In this case, the input section 108 is the light receiving section 013 for receiving an optical signal from outside. Also, the boot up program may wait for a signal, which is input to the external device such as a monitor, to be detected in step S104. In this case, the input section 108 functions as an interface for receiving a signal transmitted from the external device.

Also, in the above-described embodiment, the output section 109 displays a message like "PUSH OPEN", but it is not limited thereto. For example, the output section 109 may display a message like "CANNOT EXECUTE PROGRAM", "ERROR", "0001 (error code number)", and "SEE INSTRUCTION MANUAL " , etc. Also, the output section 109 may change only a color of a displayed character or a background. That is, a message displayed by the output section 109 may be information based on which the user can initiate some kind of action.

Further, the boot up program may notify the user in step S103 using a method other than displaying a message. For example, assume that the output section 109 is a loudspeaker, the boot up program may urge the user to perform an input to the input section 108 by producing a beep sound or a voice message from the loudspeaker in step S103. Alternatively, assume that the output section 109 is a hand controller used for a remote controller and a home video game console, etc. , the boot up program may urge the user to perform an input to the input section 108 by vibration in step S103.

Note that, in the above-described embodiment, an example in which the boot up program controls the DVD-RAM drive 008, which is the recording medium reading section 102, in steps S003 or S105, so as to open the electric-powered tray has been described, but it is not limited thereto. For example, the present invention can be applied to an on-vehicle audio apparatus, etc., in which the DVD-RAM drive 008 (the recording medium reading section 102) employs a method of ejecting a recording medium itself such as a DVD-RAM drive, etc., by a motor. In this case, if a recording medium is mounted on the recording medium reading section 102, and program data included therein is not verified, the boot up program ejects the recording medium, and causes the output section 109 to output a message for urging the user to mount a DVD-RAM medium including program data of a recovery program.

Note that, in the above-described embodiment, an example in which the correctness of the program data is not verified when the program data stored in the first program data storing section 104 is completely or partly deleted has been described, but it is not limited thereto. For example, the correctness of the program data is not verified when the program data, which should have been updated, stored in the first program data storing section 104 remains a previous version. That is, in the present invention, "a state in which the correctness of program data is not verified" includes not only a non-executable state in which the program data does not operate normally, but also a state in which the program data, which operates normally, is not desired program data.

Note that the boot up program related to the above-described embodiment may be previously written in the second program data storing section 105 when the information processing apparatus is manufactured. Alternatively, the user may write or rewrite the boot up program in the second program data storing section 105 after the information processing apparatus is manufactured. If the user writes or rewrites the boot up program in the second program data storing section 105 after the information processing apparatus is manufactured, program data may be supplied via, for example, the Internet, or may be supplied as data stored in a recording medium such as a DVD-RAM medium or a CD medium.

While the invention has been described in detail, the foregoing description is in all aspects illustrative and not restrictive. It is understood that numerous other modifications and variations can be devised without departing from the scope of the invention.

## Claims

1. An information processing apparatus controlled by a control program, comprising:
a recording medium reading section (102) controlled by the control program so as to perform loading and unloading of a recording medium;
a program data storing section (104) for storing program data corresponding to the control program;
a program status verifying section (103) for verifying correctness of the program data stored in the program data storing section (104) prior to boot up of the control program; and
a control section (101, 110) for changing a state of the recording medium reading section (102) from a first state, in which a user is not allowed to physically mount the recording medium, to a second state, in which the user is allowed to physically mount the recording medium, if the correctness of the program data is not verified by the program status verifying section (105) and the recording medium reading section is in the first state.

2. The information processing apparatus according to claim 1, further comprising:
an input section (108) for accepting an input from outside; and
an output section (109) for outputting, if the correctness of the program data is not verified by the program status verifying section, information based thereon to the user, wherein
when the output section (109) outputs the information, the control section (101, 110) waits for an input to the input section (108) , and changes a state of the recording medium reading section (102) from the first state to the second state in response to the input to the input section.

3. The information processing apparatus according to claim 2, wherein the input section (108) is an operation member provided on a main unit of the information processing apparatus.

4. The information processing apparatus according to claim 2 , wherein the input section (108) is a light receiving section provided on a main unit of the information processing apparatus.

5. The information processing apparatus according to claim 2, wherein the input section (108) is an interface for receiving a signal, which is input to an external device connected to the information processing apparatus, and transmitted from the external device.

6. The information processing apparatus according to claim 2, wherein the output section (109) is a display device provided on a main unit of the information processing apparatus.

7. The information processing apparatus according to claim 2, wherein the output section (109) is an interface for transmitting a signal to an external device connected to the information processing apparatus.

8. The information processing apparatus according to claim 1, wherein the program status verifying section (103) performs verification at a time of bootstrap of the information processing apparatus.

9. A control method of an information processing apparatus including a recording medium reading section controlled by a control program so as to perform loading and unloading of a recording medium, comprising:
a first step (S002, S102) of verifying correctness of program data corresponding to the control program prior to boot up of the control program; and
a second step (S003, S105) of changing a state of the recording medium reading section from a first state, in which a user is not allowed to physically mount a recording medium, to a second state, in which the user is allowed to physically mount the recording medium, if the correctness of the program data is not verified.

10. The control method according to claim 9, further comprising:
a third step (S103) of outputting, if the correctness of the program data is not verified, information based thereon prior to the second step (S003, S105); and
a fourth step (S104) of disabling the second step after the third step until an input from outside is performed.

11. The control method according to claim 9, further comprising a fifth step (S005, S107) of detecting whether the recording medium reading section is in the first state or in the second state after the second step (S003, S105).

12. The control method according to claim 9, further comprising a sixth step (S006, S108) of detecting whether or not the recording medium is mounted after the second step (S003, S105 ) .

13. The control method according to claim 12, wherein when it is detected in the sixth step (S006 , S108) that the recording medium is not mounted, a state is returned to a state after execution of the first step (S002, S102).

14. The control method according to claim 9, further comprising a seventh step (S007, S109) of detecting, after the second step (5003, S105), whether or not the mounted recording medium stores program data related to a recovery program for recovering the program data.

15. The control method according to claim 14, wherein when it is detected in the seventh step (S007, S109) that the program data related to the recovery program is not stored, a state is returned to a state after execution of the first step ( S002 , S102) .

16. The control method according to claim 9, further comprising an eighth step (S008, S110 ) of recovering the control program data after the second step (S003, S105) by executing a recovery program for recovering program data on the mounted recording medium.

17. The control method according to claim 9, wherein the first and second steps (S003, S105) are executed at a time of bootstrap of the information processing apparatus.

18. A boot up program which is executed at a time of bootstrap of an information processing apparatus including a recording medium reading section (102) controlled by a control program so as to perform loading and unloading of a recording medium, comprising:
a first step (S002, S102) of verifying correctness of program data of the control program prior to boot up of the control program; and
a second step (S003, S105) of changing a state of the recording medium reading section from a first state, in which a user is not allowed to physically mount a recording medium, to a second state, in which the user is allowed to physically mount the recording medium, if the correctness of the program data is not verified.

19. A recording medium which stores program data of a boot up program to be executed at a time of bootstrap of an information processing apparatus including a recording medium reading section (102) controlled by a control program so as to perform loading and unloading of a recording medium, wherein
the boot up program includes:
a first step (S002, S102) of verifying correctness of program data of the control program; and
a second step (S003, S105) of changing a state of the recording medium reading section from a first state, in which a user is not allowed to physically mount a recording medium, to a second state, in which the user is allowed to physically mount the recording medium, if the correctness of the program data is not verified.
